# EUROPEAN PATENT APPLICATION

(11) **EP 2 437 525 A1**
(43) Date of publication of application: **04.04.2012**
(21) Application number: 11177954.2
(22) Date of filing: 18.08.2011
(51) Int. Cl.: H04W 4/02, H04M 1/00, H04L 29/08, H04W 52/00, H04W 64/00, G06F 17/30, G01S 5/02, G01S 5/00, G01S 19/34, G01S 19/48, G01S 19/45

(54) **Method and apparatus for storing media data and associated location information in a mobile terminal**

(30) Priority: 18.08.2010 KR 20100079702
(71) Applicant: Samsung Electronics Co., Ltd., Suwon-si, Gyeonggi-do (KR)
(72) Inventor: Son, In-Gu, Suwon-si Gyeonggi-do (KR)
(74) Representative: Raukema, Age

(57) **Abstract**

The invention provides a method for storing media data and associated location information in a mobile terminal (524), which mobile terminal
- is arranged to, in operation, connect to a serving base station which is arranged to transmit base station information to be received by the mobile terminal (514);
- comprises a media capture device for capturing media data, such as images, on request of a user of the mobile terminal;
- is provided with a location information module for acquiring location information of the mobile terminal (518); and
- is provided with a storage unit storing a plurality of items of media data and a plurality of items of media metadata each one of said plurality of items of media metadata being associated with one or more of said items of media data, and each one of said items of media metadata comprising base station information of a serving base station and associated location information of the mobile terminal at the time said media data was captured,
the method comprising:
- capturing further media data in response to a request to capture such further media data,
- searching in said storage unit for an item of media metadata which has base station information matching current base station information currently received from a currently serving base station (516),
- operating or not operating said location information module to acquire current location information of the mobile terminal in dependence on whether said searching renders an item of media metadata which has base station information matching current base station information.

## Description

### BACKGROUND OF THE INVENTION

### 1. Field of the Invention

The present invention relates to a method and apparatus for storing media data and associated location information in a mobile terminal..

### 2. Description of the Related Art

Recently, with the development of networking technology and digital devices, many people have uploaded and shared in their blogs or photo sharing sites photographs taken using cameras, in particular using cameras comprised in mobile terminals such as mobile phones. In addition, as map information services have been actively provided in recent years, methods of uploading users' photographs in association with maps have spread gradually.

Internet service companies such as Google and Microsoft allow users to input information associated with photographing locations in addition to simply uploading their photographs on the Internet. As these companies are expanding, they are trying to extend their business to new service areas. One of these new areas is the process of inputting location information associated with a piece of media, referred to as geo-tagging.

By utilizing media which has been tagged with location information, users can acquire various information, such as travel information, in advance through photographs taken by other people at real locations while looking at a map. In addition, as leading Internet service companies provide photo services associated with locations, the interest in geo-tagging has increased. When photographs are uploaded on a web album on the Internet, the photographs are automatically arranged in time order, and also information such as the type of camera used in the photographing is recorded. This can be achieved because exchangeable image file format (EXIF) tag information is automatically stored in a photo header file when an image is captured with the camera.

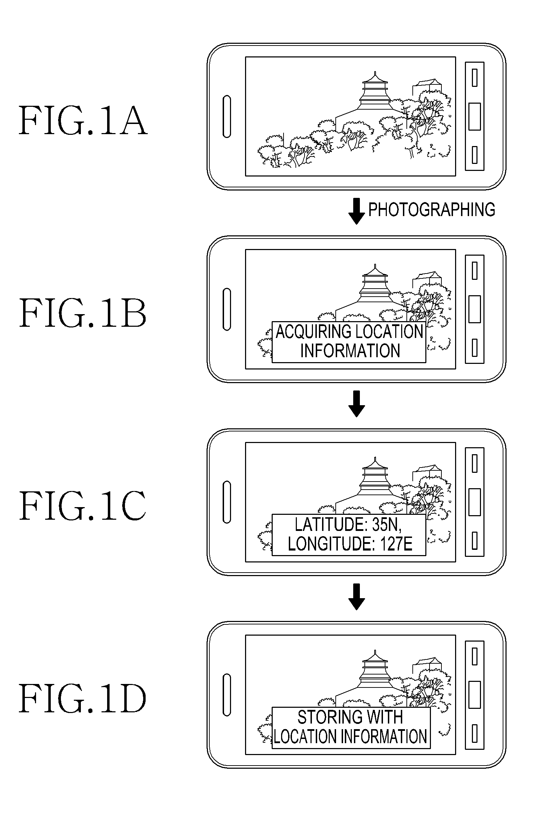

Meanwhile, FIGs. 1A to 1D are views showing an example of a screen associated with the performance of geo-tagging in a conventional mobile terminal.

An image photographed in a geo-tagging method using a camera cooperating with a GPS is obtained in a manner as shown in FIGs. 1A to 1D. First, while a location information module is being operated in order to acquire location information of a photographed image, as shown in FIG. 1A, the user is notified of a waiting time for acquiring location information, i.e. a message such as "Acquiring Location Information," in the form of an indicator, as shown in FIG. 1B. Next, when the waiting period, during which the location information module is being operated, has passed, and corresponding location information of the photographed image is acquired, the location information is displayed as shown in FIG. 1C, and geo-tagging onto the corresponding image is performed. Then, the acquired location information is stored together in EXIF tag information, which is automatically stored in a header file of the image onto which the geo-tagging is performed, which is signaled to the user in the form of an indicator, as shown in FIG. 1D.

As described above, whenever geo-tagging onto a photographed image is performed, it is necessary to operate the location information module cooperating with e.g. a GPS in order to acquire corresponding location information of an area in which photographing is performed. In this case, due to a waiting time during which the location information module is being operated in order to acquire location information, power of the mobile terminal is consumed whenever geo-tagging is performed. Thus, there is a need for an reduced waiting time during image capturing, and for reduced power consumption to extend mobile phone battery life.

### SUMMARY OF THE INVENTION

The invention provides a method for storing media data and associated location information in a mobile terminal, which mobile terminal
- is arranged to, in operation, connect to a serving base station which is arranged to transmit base station information to be received by the mobile terminal;
- comprises a media capture device for capturing media data, such as images, on request of a user of the mobile terminal;
- is provided with a location information module for acquiring location information of the mobile terminal; and
- is provided with a storage unit storing a plurality of items of media data and a plurality of items of media metadata each one of said plurality of items of media metadata being associated with one or more of said items of media data, and each one of said items of media metadata comprising base station information of a serving base station and associated location information of the mobile terminal at the time said media data was captured,
the method comprising:
- capturing further media data in response to a request to capture such further media data,
- searching in said storage unit for an item of media metadata which has base station information matching current base station information currently received from a currently serving base station,
- operating or not operating said location information module to acquire current location information of the mobile terminal in dependence on whether said searching renders an item of media metadata which has base station information matching current base station information.

The invention further provides a mobile terminal comprising:
- a mobile communication module to connect to a serving base station which is arranged to transmit base station information to be received by the mobile terminal;
- a media capture device for capturing media data, such as images, on request of a user of the mobile terminal;
- a location information module for acquiring location information of the mobile terminal; and
- a storage unit storing a plurality of items of media data and a plurality of items of media metadata each one of said plurality of items of media metadata being associated with one or more of said items of media data, and each one of said items of media metadata comprising base station information of a serving base station and associated location information of the mobile terminal at the time said media data was captured,
   the mobile terminal having a controller arranged to:
- capture further media data via said media capture device in response to a request to capture such further media data,
- search in said storage unit for an item of media metadata which has base station information matching current base station information currently received from a currently serving base station,
- operate or not operate said location information module to acquire current location information of the mobile terminal in dependence on whether said searching renders an item of media metadata which has base station information matching current base station information.

Media data can be for example (photographic) images, video clips, recorded audio data, etc. Storing media data and associated location information is also known as geo-tagging. A base station can be a wireless communications station installed at a fixed location and servicing mobile terminals in an area surrounding the location of the base station. Examples of base stations are cellular CDMA cell sites or GSM Base Transceiver Stations. A base station transmits base station information which uniquely identifies the base station.

In an embodiment of the invention, if such an item of media metadata with matching base station information is found in said storage unit, the method comprises retrieving the associated location information of the mobile terminal from said found item of media metadata, and storing said further media data together with further media metadata comprising said current base station information and said retrieved associated location information.

In an embodiment of the invention, if such an item of media metadata with matching base station information is not found in the storage unit, the method comprises operating the location information module to acquire current location information of the mobile terminal and storing said further media data together with further media metadata comprising said current base station information and said acquired current location information.

In other words, the present invention provides an apparatus and method for faster acquiring location information with reduced time power consumption in a mobile terminal in such a manner as to store information relating to a serving base station, to which the mobile terminal is connected in an area where a recording is performed, together with location information acquired through a location information module, to use the location information stored together with the stored base station information when it is determined that serving base station information of an area where media is recorded is the same as the stored base station information, so that it is then possible to perform geo-tagging of captured media data, without operating a location information module.

In accordance with an aspect of the present invention, there is provided a method for power control in a mobile terminal, the method including: searching for whether serving base station information periodically transmitted from a serving base station in communication with the mobile terminal, exists in a plurality of stored media metadata when a media capture device driving is requested; capturing media data, and simultaneously driving a location information module when the serving base station information is not found; and storing location information acquired through the location information module in metadata of a recorded media data, and mapping the serving base station information to the metadata.

### BRIEF DESCRIPTION OF THE DRAWINGS

The aspects, features and advantages of the present invention will be more apparent from the following detailed description taken in conjunction with the accompanying drawings, in which:
FIGs. 1A to 1D are views showing an example of a screen associated with the performance of geo-tagging in a conventional mobile terminal;
FIGs. 2A and 2B are views showing an example of a screen for explaining a geo-tagging operation for a photographed image in a mobile terminal according to an embodiment of the present invention;
FIG. 3 is a block diagram illustrating the configuration of an apparatus for storing location information when geo-tagging is performed in a mobile terminal according to an embodiment of the present invention;
FIG. 4 is a view schematically illustrating the configuration of a wireless communication system to which the present invention is applied; and
FIG. 5 is a flowchart illustrating a method for storing location information when geo-tagging is performed in a mobile terminal according to an embodiment of the present invention.

### DETAILED DESCRIPTION OF THE INVENTION

Hereinafter, exemplary embodiments of the present invention will be described in reference to the accompanying drawings. In the below description, many particular items are shown, but these are provided only to help the general understanding of the present invention. It will be understood by those skilled in the art that various changes in form and detail may be made within the scope of the present invention.

The present invention proposes an apparatus and method for providing geo-tagging for a recorded media data, such as captured image data, in such a manner as to acquire location information of the recorded media through a mobile terminal having a location information module, and simultaneously to store information relating to a serving base station of the mobile terminal, together with the acquired location information, wherein the serving base station is located in an area in which the image has been recorded. Accordingly, when it is determined that media is recorded corresponds in an area of a base station having base station information that matches stored base station information, location information stored together with the matching stored base station information is utilized. Thus, it is unnecessary to drive the location information module to acquire location information whenever geo-tagging is performed, thereby reducing the waiting time for acquiring location information and making it is possible to reduce the power consumption of the mobile terminal.

Also, preferably, the mobile terminal according to the present invention may be a mobile communication terminal which has a location information module for acquiring location information. In addition, it is apparent that the teachings of the present invention can be applied to other information communication devices, multimedia devices, and their applications, such as a digital broadcasting terminal, a Personal Digital Assistant (PDA), a smart phone, or a 3G terminal. Examples of the 3G terminals are an International Mobile Telecommunication 2000 (IMT-2000) terminal, a Wideband Code Division Multiple Access (WCDMA) terminal, a Global System for Mobile communication (GSM)/General Packet Radio Service (GPRS) terminal, and a Universal Mobile Telecommunication Service (UMTS) terminal.

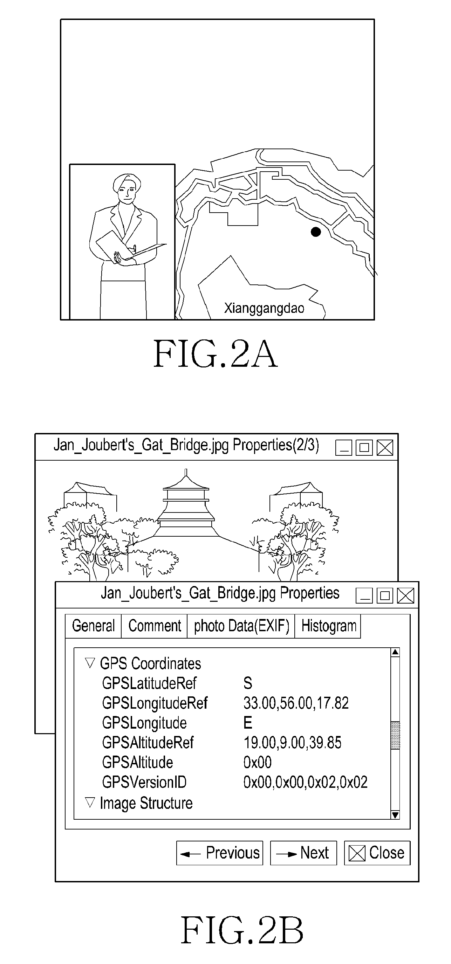

Hereinafter, a geo-tagging operation for a photographed image in a mobile terminal according to an embodiment of the present invention will be schematically described with reference to FIGs. 2A and 2B.

First, FIG. 2A is a view, for example as shown on the display of a mobile terminal according the invention, illustrating a map, which view also includes icons that refer to image data obtained through photographing at a specific location. In addition the view includes image data obtained through real photographing. When the user selects an icon displayed on the map through a user input means, for example, a mouse over or mouse click operation, image data corresponding to the selected icon is displayed on a predetermined position of the map, and location information, i.e. latitude and longitude information, of a location where the photographed image data has been taken is provided together with the image data. The location information associated with the photographed image can have been obtained at the time of image capturing through a location information module, e.g. a Global Positioning System (GPS), for identifying or acquiring the position of a mobile terminal. Generally, the location information is provided in such a manner as to calculate accurate time information and distance information from three or more satellites, to calculate latitude, longitude, and time information by applying triangulation to the calculated accurate time and distance information, and to correct errors of the calculated location and time information.

In the present example, image data including the location information has been formed in such a manner that specific information of the image data including the location information is automatically stored in an image file in the form of metadata when a photograph is captured by a camera. Here, the metadata is formatted according to an exchangeable image file format (EXIF) tag, which format also includes the brand of the camera, a photographing time, exposure information, and a lens focal length. Such attributes of image data, together with a corresponding file name, are provided to the user, as shown in FIG. 2B, so that geo-tagging can be performed on the photographed image.

In the present example, according to an exemplary embodiment of the present invention, serving base station information is mapped to the location information and is stored in for example the metadata of the captured media data. Here, the base station information represents information on a base station which is currently providing a service to the mobile terminal, and includes a downlink center frequency of the base station, an identifier (ID) of the base station, and uplink/downlink channel information. Therefore, in the corresponding metadata of captured media data, such as an image, location information and information relating to a base station managing an area where the image data is captured, i.e. an area where the mobile terminal is located, are stored together. The serving base station indicates a base station which is connected to the mobile terminal and is currently providing a service to the mobile terminal. The mobile terminal is thus inside the service area of the serving base station.

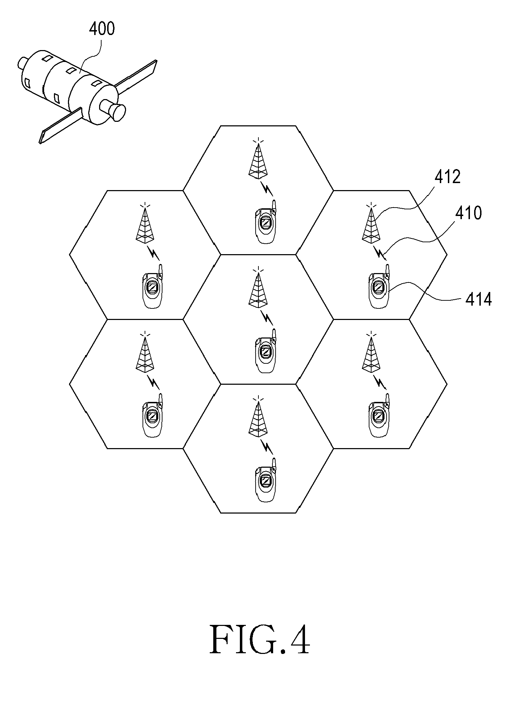

FIG. 4 is a view schematically illustrating the configuration of a wireless communication system in which the present invention may be applied. As shown in FIG. 4, the wireless communication system includes a Global Positioning System (GPS) satellite 400 in a network comprising a plurality of such satellites. The GPS satellites transmit information to a plurality of mobile terminals each having a location information module, which can receive and use said transmitted information for acquiring desired location information. The wireless communication system also includes a plurality of base stations in communication with the plurality of mobile terminals, said base stations providing the mobile terminals with services. A base station 412 in the wireless communication system periodically transmits its own information to at least one mobile terminal 414, which is located within the service area or coverage 410 of the serving base station 412, thereby providing a plurality of mobile terminals with a call service, a data service, etc.

According to the invention, the mobile terminal 414 is arranged to map the received base station information from the serving base station 412 to the acquired location information from the location information module. This mapping can be stored for later retrieval in a storage unit of the mobile terminal. The mapping thus effectively links the service area of a serving base station 412 area 410 to acquired location information, such as information in the form of a latitude and longitude. When at a later time, location information is again requested, the mobile terminal can check the latest received base station information and compare said information with the stored base station information. If the base station information is identical, the mobile terminal 414 can conclude that it is still located inside the service area 410 of the base station 412. In that case, the stored location information that the stored base station information is mapped to, can be used as at least an approximation of the current location of the mobile terminal. It is then not necessary to again operate the location information module to acquire location information for the current location of the mobile terminal.

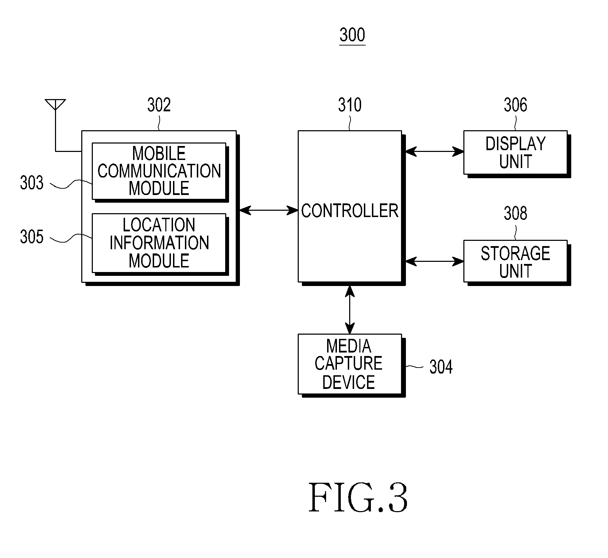

FIG. 3 is a block diagram illustrating the configuration of a mobile terminal according to an embodiment of the present invention. Referring to FIG. 3, the mobile terminal 300 includes a wireless communication unit 302, a media capture device 304, such as a camera, a display unit 306, a storage unit 308, and a controller 310. In addition, the mobile terminal 300 may further include a microphone, a speaker, an alarm unit, etc.

First, the wireless communication unit 302 includes one or more components for allowing radio communication between the mobile terminal 300 and a wireless communication system or for radio communication between the mobile terminal 300 and a network in which the mobile terminal 300 is located. For example, the wireless communication unit 302 may include a mobile communication module 303 and a location information module 305.

The mobile communication module 303 transmits/receives radio signals to/from at least one among a base station, an external terminal, and a server in a mobile communication network. Here, the radio signals may include a voice call signal, a video call signal, and/or various types of data based on text/multimedia message transmission/reception. Here, all communication devices with which the mobile communication terminal may wirelessly communicate and which devices transmit characteristic information about themselves are all referenced with the term "base station" and the transmitted information about these devices is referenced with the term "base station information".

Also, the location information module 305 is a module for identifying or acquiring a location of the mobile terminal 300. A representative example of a location information module 305 is a Global Positioning System (GPS) module.

The camera 304 processes image frames of still or moving pictures obtained by an image sensor in an image communication mode or a photographing mode according to the operation mode of the mobile terminal 300. In addition, the processed image frames may be displayed on the display unit 306 under the control of the controller 310.

The display unit 306 displays information processed in the mobile terminal 300. For example, when the mobile terminal 300 is in a phone call mode, the display unit 306 displays a user interface (UI) or a graphical user interface (GUI) associated with a call. When the mobile terminal 300 is in a video call mode or photographing mode, the display unit 306 displays a captured image and/or received image, or a UI or a GUI. When mobile terminal 300 is in a geo-tagging mode, the display unit 306 displays a still picture and/or moving picture on a map and/or corresponding attributes.

The storage unit 308 may store programs for the processing and control operations of the controller 310, and may perform a function of temporarily storing input/output data, for example, a phone book, a message, a still picture, a moving picture, etc. Also, the storage unit 308 stores specific information corresponding to still picture and/or moving picture data, which has been obtained through recording by the media capture device 304, as a still picture and/or moving picture file in the form of metadata, and also stores base station information periodically transmitted from a serving base station, which is connected with the mobile terminal 300, together with the specific information. The controller 310 controls the general operations of the mobile terminal 300. For example, the controller 310 can perform control and processing associated with voice communication, data communications, image communication, etc.

Also, when the camera 304 is being operated, for example in response to a user request to capture media data such as photographic image data, the controller 310 searches for whether serving base station information exists in a plurality of pieces of image metadata stored in the storage unit 308, and controls a location information module to be operated or not to be operated according to a result of the search, thereby performing a control operation such that geo-tagging is performed on recorded media.

In more detail, when the media capture device 304 is requested to be operated, the controller 310 searches a plurality of media metadata stored in the storage unit 308 for stored base station information matching the base station information that is recently received from a serving base station, which base station is currently connected with the mobile terminal 300.

When no such base station information is found, the controller 310 operates the location information module 305 of the wireless communication unit 302 to acquire location information corresponding to the current location of the mobile terminal 300 while recording a subject through the camera 304. Then, the controller 310 stores the acquired location information, which has been obtained through the location information module 305, in metadata of a corresponding image, and also stores the recently received base station information, so that said base station information is mapped to the acquired location information. In the current example, both the base station information and the location information are stored in the metadata of the captured media data.

However, when base station information matching the recently received base station information is found in the -stored media metadata, the controller 310 controls the camera 304 to capture an image, and retrieves the stored location information mapped from the found metadata comprising the matching base station information, and stores said retrieved location information and the serving base station information in metadata of the captured media data.

In other words, when serving base station information does not exist in a plurality of pieces of stored media metadata, the controller 310 drives the location information module while recording a subject, and performs a control operation such that location information acquired through the location information module and the base station information are mapped to metadata of recorded media.The operation of the controller 310 to search for whether or not the currently serving base station information exists in a stored metadata is for example performed only when the user makes a request for geo-tagging of captured media data.

The apparatus 300 thus described can store location information associated with media data. In cases where location information has already been acquired and stored in association with media data captured in the area of the same base station area as the currently serving base station, the apparatus 300 can retrieve and re-use said location information, thus making a new location information acquisition using the location information module 305 unnecessary. This saves time and power. As such, the apparatus is arranged to control power consumption when geo-tagging is performed.

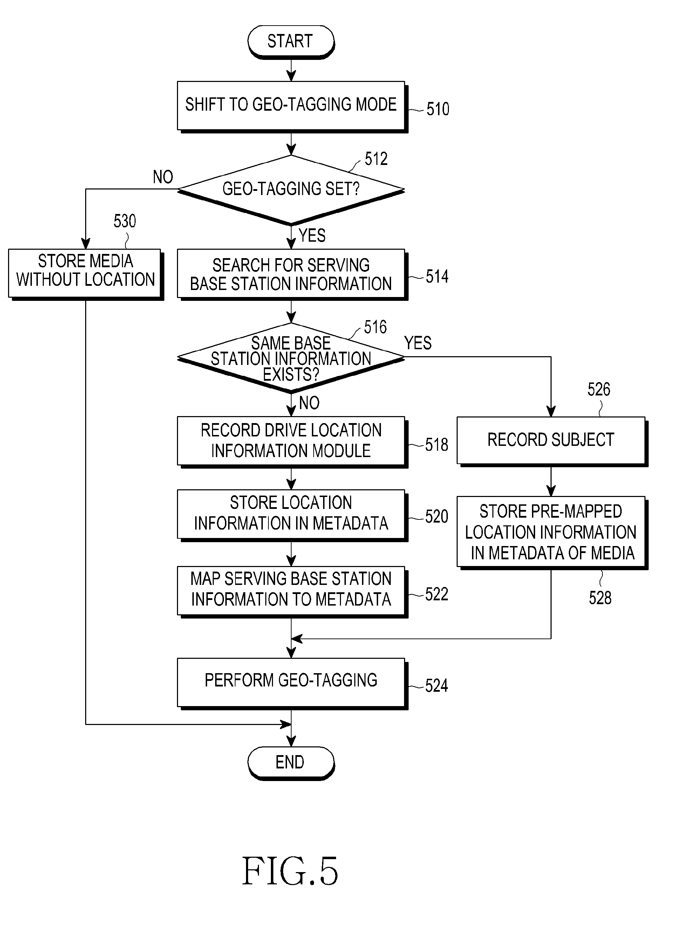

FIG. 5 is a flowchart illustrating a method for storing media data and associated location information when geo-tagging is performed in a mobile terminal according to an embodiment of the present invention. Referring to FIG. 5, first, in step 510, the current mode of the mobile terminal is shifted to a geo-tagging mode.

In step 512, it is checked if geo-tagging is set in the shifted geo-tagging mode. In other words, when camera operation to capture media data is requested by the user, it is checked if the performance of geo-tagging for acquiring location information of media data to be recorded through the media capture device is desired, and the procedure proceeds to step 514 when the performance of geo-tagging on the corresponding media is desired as a result of the check. In contrast, when the performance of geo-tagging is not desired, the procedure proceeds to step 530, where recorded media data is stored without location information.

In step 514, a comparison and search operation is performed to determine if base station information periodically transmitted from a serving base station, which is currently connected with the mobile terminal, exists in at least one of a potential plurality of stored media metadata. In this example, the media metadata is stored using an exchangeable image file format (EXIF) tag, which includes the brand of the camera, a photographing time, exposure information, and a lens focal length.

In step 516, it is checked if information on the same base station as the current serving base station is found as a result of the operation of step 514. When the serving base station information has been stored in at least one piece of metadata among the plurality of pre-stored media metadata, as a result of step 516 the procedure proceeds to step 526, where a subject is recorded.

Then, in step 528, location information existing in the at least one piece of metadata, in which the same base station information as the information received from the current serving base station has been stored, is stored in metadata of the image that was captured in step 526. Next, the procedure proceeds to step 524, where geo-tagging on the photographed media is performed.

Alternatively, if the serving base station information is not found in any metadata among the plurality of stored media metadata as a result of the check in step 516, the procedure proceeds to step 518, where an image is recorded through the camera, and simultaneously a location information module is operated. The location information module is operated to acquire location information such as latitude and longitude information of an area, in which the mobile terminal is currently located. In step 520, the location information acquired through the location information module is stored in media metadata obtained through the recording in step 518.

In step 522, base station information periodically transmitted from the serving base station, which is currently connected with the mobile terminal and which mobile terminal receives said serving base station information, is stored in the metadata in which the location information has been stored in step 520. Accordingly, when in the future geo-tagging is requested to be performed on media, it is possible to search for whether or not metadata exists comprising location information which was acquired in the current base station area. If this image metadata exists, the location information of that image metadata can be utilized, so there is no need for using the location information module to acquire location information each time geo-tagging is performed in the same serving base station area. As a result, the waiting time required for the mobile terminal to drive the location information module and to acquire location information is reduced, so that it is also possible to reduce the power consumption of the mobile terminal when geo-tagging is performed.

It will be clear to a skilled person that it is not necessary to store the base station information together with the image or as part of the image metadata in a one-to-one relation to the image. Then, such metadata can be associated with more than one image via any known reference scheme. For example, it is also possible to practice the invention by managing and searching a separate table that maps base station information to location information. Images should then have an appropriate reference to such table. Then, in step 514, this table is searched for an entry matching the current serving base station information, in step 522 location information is written to this table, and in step 528 location information is read from the table. However, storing the base station information and the location information in the media metadata has the advantage that no separate mapping data structure needs to be maintained.

While the invention has been shown and described with reference to certain exemplary embodiments thereof, it will be understood by those skilled in the art that various changes in form and details may be made therein without departing from the scope of the invention as defined by the appended claims. Accordingly, the scope of the invention is not to be limited by the above exemplary embodiments but only by the claims and the equivalents thereof.

Note that the above-described methods according to the present invention can be realized in hardware or as software or computer code that can be stored in a recording medium such as a CD ROM, an RAM, a floppy disk, a hard disk, or a magneto-optical disk or downloaded over a network, so that the methods described herein can be executed by such software using a general purpose computer, or a special processor or in programmable or dedicated hardware, such as an ASIC or FPGA. As would be understood in the art, the computer, the processor or the programmable hardware include memory components, e.g., RAM, ROM, Flash, etc. that may store or receive software or computer code that when accessed and executed by the computer, processor or hardware implement the processing methods described herein.

Having thus described an exemplary embodiment of a method for power control in a mobile environment, it should be apparent to those skilled in the art that certain advantages of the system have been achieved. According to the present invention, base station information of an area, which is not included in a photographing history, is stored. Thereafter, when it is determined that an area where an image is photographed is the area of the same base station as that corresponding to pre-stored base station information, location information stored together with the pre-stored base station information is utilized, without driving a location information module to acquire location information. Accordingly, it is unnecessary to drive the location information module to acquire location information every time whenever geo-tagging is performed, thereby reducing the waiting time for acquiring location information, so that it is possible to reduce the power consumption of the mobile terminal.

## Claims

1. A method for storing media data and associated location information in a mobile terminal, which mobile terminal
- is arranged to, in operation, connect to a serving base station which is arranged to transmit base station information to be received by the mobile terminal;
- comprises a media capture device for capturing media data, such as images, on request of a user of the mobile terminal;
- is provided with a location information module for acquiring location information of the mobile terminal; and
- is provided with a storage unit storing a plurality of items of media data and a plurality of items of media metadata each one of said plurality of items of media metadata being associated with one or more of said items of media data, and each one of said items of media metadata comprising base station information of a serving base station and associated location information of the mobile terminal at the time said media data was captured,
the method comprising:
- capturing further media data in response to a request to capture such further media data,
- searching in said storage unit for an item of media metadata which has base station information matching current base station information currently received from a currently serving base station,
- operating or not operating said location information module to acquire current location information of the mobile terminal in dependence on whether said searching renders an item of media metadata which has base station information matching current base station information.

2. The method of claim 1, further comprising if such an item of media metadata with matching base station information is found in said storage unit, retrieving the associated location information of the mobile terminal from said found item of media metadata, and storing said further media data together with further media metadata comprising said current base station information and said retrieved associated location information.

3. The method of claim 1 or 2, further comprising if such an item of media metadata with matching base station information is not found in the storage unit, operating the location information module to acquire current location information of the mobile terminal and storing said further media data together with further media metadata comprising said current base station information and said acquired current location information.

4. The method of any of the claims 1-3, wherein the stored media metadata comprising base station information and associated location information is formatted as exchangeable image file format, EXIF.

5. The method of any of the preceding claims, further comprising geo-tagging the mapped location information and the serving base station information onto the captured media data.

6. The method of any of the preceding claims, wherein said searching in said storage unit for such an item of media metadata is performed when a geo-tagging request for the further media data is made by a user.

7. The method of any of the preceding claims, wherein the base station information comprises:
a downlink center frequency of a base station, which is providing a service in an area where the mobile terminal is currently located; and/or
an identifier (ID) of the base station, and/or uplink/downlink channel information.

8. The method of any of the preceding claims, wherein the captured media data corresponds with media data previously captured for geo-tagging in a service area in which a serving base station currently connected to the mobile terminal is located.

9. The method of any of the preceding claims, wherein the media metadata corresponds to an exchangeable image file format, EXIF, tag, which comprises a brand of the camera, a photographing time, exposure information, and a lens focal length.

10. The method of any of the preceding claims, wherein the location information module is a global positioning satellite device.

11. A mobile terminal comprising:
- a mobile communication module to connect to a serving base station which is arranged to transmit base station information to be received by the mobile terminal;
- a media capture device for capturing media data, such as images, on request of a user of the mobile terminal;
- a location information module for acquiring location information of the mobile terminal; and
- a storage unit storing a plurality of items of media data and a plurality of items of media metadata each one of said plurality of items of media metadata being associated with one or more of said items of media data, and each one of said items of media metadata comprising base station information of a serving base station and associated location information of the mobile terminal at the time said media data was captured,
the mobile terminal having a controller arranged to:
- capture further media data via said media capture device in response to a request to capture such further media data,
- search in said storage unit for an item of media metadata which has base station information matching current base station information currently received from a currently serving base station,
- operate or not operate said location information module to acquire current location information of the mobile terminal in dependence on whether said searching renders an item of media metadata which has base station information matching current base station information.

12. The mobile terminal according to claim 11, the controller being arranged to:
- if such an item of media metadata with matching base station information is found in said storage unit, retrieve the associated location information of the mobile terminal from said found item of media metadata, and store said further media data together with further media metadata comprising said current base station information and said retrieved associated location information.

13. The mobile terminal according to claim 11, the controller being arranged to:
- if such an item of media metadata with matching base station information is not found in the storage unit, operate the location information module to acquire current location information of the mobile terminal and store said further media data together with further media metadata comprising said current base station information and said acquired current location information.

14. The apparatus of any of the claims 11-13, wherein the controller searches in said storage unit for such an item of media metadata when a geo-tagging request for the recorded media is made by a user.

15. The apparatus of any of the claims 11-14, wherein the media metadata is formatted as an exchangeable image file format, EXIF, tag, which comprises a brand of the camera, a photographing time, exposure information, and a lens focal length.

16. The apparatus of any of the claims 11-15, wherein the location information module is a global positioning system, GPS, device.
